# EUROPEAN PATENT SPECIFICATION

(11) **EP 2 058 342 B1**
(45) Date of publication and mention of the grant of the patent: **11.05.2011**
(21) Application number: 06782104.1
(22) Date of filing: 01.08.2006
(51) Int. Cl.: C08F 216/06, C08F 2/20, C08L 29/04

(54) **Dispersion stabilizer for suspension polymerization of vinyl-based compound**
DISPERSIONSSTABILISATOR FÜR DIE SUSPENSIONSPOLYMERISATION VON VINYLVERBINDUNGEN
STABILISANT DE DISPERSION POUR LA POLYMÉRISATION EN SUSPENSION DE COMPOSÉS VINYLIQUES

(43) Date of publication of application: 13.05.2009
(73) Proprietor: The Nippon Synthetic Chemical Industry Co., Ltd., Osaka-shi, Osaka 531-0076 (JP)
(72) Inventor: SHIBUTANI, Mitsuo, Osaka-shi, Osaka 531-0076 (JP); SAITO, Masahiro, Osaka 531-0076 (JP)
(74) Representative: Kuhnen & Wacker
(86) International application number: PCT/JP2006/315227
(87) International publication number: WO 2008/015739

(56) References cited:
- WO-A1-2006/018870
- JP-A- 2002 241 433
- JP-A- 2002 284 818
- JP-A- 2004 285 143
- JP-A- 2006 241 448

## Description

### TECHNICAL FIELD

The present invention relates to a dispersion stabilizer for suspension polymerization of a vinyl-based compound, in particular, a dispersion stabilizer for suspension polymerization of vinyl chloride. More particularly, the invention relates to a dispersion stabilizer for suspension polymerization of a vinyl-based compound which gives vinyl chloride-based polymer particles having a sharp particle size distribution and a high bulk density owing to excellent dispersion stability during polymerization. An aqueous solution thereof is less apt to foam and, hence, the stabilizer is effective in inhibiting the formation of a wet foam during polymerization and diminishing the formation of a dry foam. The stabilizer therefore inhibits the formation of polymer scale, which is causative of fish-eyes, and the formation of a foamy polymer. Furthermore, with the stabilizer, vinyl chloride-based polymer particles with less coloring and excellent in heat resistance can be produced.

### BACKGROUND ART

A general process for industrially producing a vinyl chloride-based resin is batch type suspension polymerization in which a vinyl chloride-based monomer is dispersed in an aqueous medium in the presence of a dispersion stabilizer and an oil-soluble polymerization initiator is used to perform polymerization. Factors which govern the quality of vinyl chloride-based resins generally include a rate of polymerization, a ratio of water/monomer, a polymerization temperature, an amount of polymerization initiator, a type of polymerization vessel, a stirring rate, and a kind and amount of the dispersion stabilizer. It is said that the dispersion stabilizers are most influential among these factors.

Performances required of dispersion stabilizers for suspension polymerization of a vinyl chloride-based resin include: (a) to attain sufficient protective colloidal ability and sufficient dispersing ability even when used in a small amount and to thereby serve to give vinyl chloride-based polymer particles having a sharp particle size distribution; (b) to serve to give vinyl chloride-based polymer particles which are porous or are inhibited from forming a skin layer so as to increase a rate of plasticizer absorption and thereby facilitate molding; (c) to serve to give vinyl chloride-based polymer particles respectively having porosities which are converged to an almost given range so as to remove the vinyl chloride monomer remaining in the porous particles or prevent from forming fish-eyes or the like in a molded article; and (d) to serve to give vinyl chloride-based polymer particles having an increased bulk density so as to improve processing efficiency.

Generally used as the dispersion stabilizers are polyvinyl alcohol-based resins (hereinafter polyvinyl alcohol is abbreviated to PVA), cellulose derivatives, gelatin, and the like. These are used alone or in combination. Of these, PVA-based resins are most extensively used. However, the PVA-based resins are not considered to fully satisfy the requirements described above, and various attempts are being made in order to improve the performances thereof.

Recently, a reduction in the time period required for polymerization is desired for improving productivity. It has been proposed to use a polymerization vessel equipped with a reflux condenser in order to increase the rate of removing the heat of polymerization reaction. Furthermore, a method in which an aqueous medium which has been heated beforehand is added in order to shorten heating time (hot-charge method) has been proposed.

However, in the case of using a polymerization vessel equipped with a reflux condenser, there has been a problem that the formation of a wet foam and dry foam becomes sever because the pressure around the reflux condenser decreases due to the condensation of the vapor of the vinyl chloride-based monomer. The term wet foam means a foam attributed mainly to the surface-activating ability of the PVA-based resin and mainly containing water. The wet foam reduces the effective capacity of the polymerization vessel and can hence be a factor which reduces productivity. On the other hand, the term dry foam means a foam which generates mainly in the middle to late period of polymerization and mainly containing vinyl chloride-based resin particles and the vinyl chloride-based monomer. The dry foam may become a foamy polymer or deposit as a polymer scale on the inner wall of the polymerization vessel and within the reflux condenser. The polymer scale has posed a problem, for example, that it inhibits heat removal during polymerization or comes into the product to cause fish-eyes.

The following have been proposed as measures against such problems: a dispersion stabilizer for suspension polymerization of a vinyl-based compound comprising a PVA-based polymer which gives an ultraviolet absorption spectrum having an absorbance at 280 nm (a) of higher than 0.1 and an absorbance at 320 nm (b) of 0.3 or higher, a value of (a)/(b) of less than 0.3 when in a 0.1% by weight aqueous solution, and which has a block character of 0.4 or higher (see, for example, patent document 1); a dispersion stabilizer for suspension polymerization of a vinyl-based compound comprising a PVA-based polymer obtained by subjecting a PVA-based polymer having a degree of saponification of 60% by mol or higher and a block character of 0.3 to 0.6 to a heat treatment at 90 to 180°C for 0.5 to 20 hours in an atmosphere having an oxygen concentration of 8,000 ppm or lower (see, for example, patent document 2); and a dispersion stabilizer for suspension polymerization of a vinyl-based compound comprising a PVA-based polymer which gives an ultraviolet absorption spectrum having an absorbance at 280 nm (c) of higher than 0.1 and an absorbance at 320 nm (d) of 0.07 or higher, a value of (c)/(d) of 0.7 or more when in a 0.1% by weight aqueous solution, which has a YI of 40 or lower when in a 1% by weight aqueous solution, which has a transmittance, as measured at 30°C and a wavelength of 500 nm, of 80% or higher when in a 0.1% by weight aqueous solution, and which has a block character of 0.35 or higher and an Mw/Mn of 2.1 to 4.9 (see, for example, patent document 3).
Patent Document 1: JP-A-8-283313
Patent Document 2: JP-A-2004-189888
Patent Document 3: JP-A-2004-189889

### DISCLOSURE OF THE INVENTION

### PROBLEMS THAT THE INVENTION IS TO SOLVE

However, the dispersion stabilizer for suspension polymerization described in patent document 1 is insufficient in dispersion stabilization although foam forming during polymerization is inhibited. There are cases where use of this stabilizer results in formation of coarse particles of the vinyl chloride-based resin. The dispersion stabilizers for suspension polymerization described in patent documents 2 and 3 are ones obtained by incorporating double bonds into a PVA-based resin by a heat treatment or another technique. Because of this, the vinyl chloride-based resin obtained with these stabilizers has insufficient heat resistance and hence has problems concerning coloration and zinc burning which occurs when a barium-zinc-based stabilizer is used. It was found that there still is room for improvement.
Namely, there is a desire for a dispersion stabilizer for suspension polymerization of a vinyl-based compound satisfying the following requirements: the stabilizer attains excellent dispersion stabilization during polymerization to thereby diminish the formation of coarse particles; an aqueous solution thereof is less apt to foam and, hence, it is effective in diminishing the formation of a wet foam and also in diminishing the formation of a dry foam; the stabilizer thus inhibits the deposition of a polymer scale, which is causative of fish-eyes, on the inner wall of the polymerization vessel and further inhibits the formation of a foamy polymer; and vinyl chloride-based polymer particles having excellent heat resistance, with less coloring and zinc burning, and having a high bulk density can be produced with the stabilizer.

### MEANS FOR SOLVING THE PROBLEMS

The present inventor diligently made investigations under these circumstances. As a result, it has been found that an object is accomplished with a dispersion stabilizer for suspension polymerization of a vinyl-based compound which comprises a PVA-based resin comprising a 1,2-diol component at a side chain and having a degree of saponification of 65 to 87% by mol.
The greatest feature of the invention resides in that a PVA-based resin comprises a 1,2-diol component at a side chain, in particular, a primary hydroxyl group, has been applied to a dispersion stabilizer for suspension polymerization. This has brought about the effects characteristic of the invention.
Incidentally, the PVA-based resin containing 1,2-glycol bonds in an amount of 1.9% by mol or larger described in JP-A-2001-233905 is obtained only by conducting polymerization in an ordinary PVA production step at a high temperature and high pressure. These 1,2-glycol bonds indicate a bonding mode of a main chain. The PVA-based resin described therein differs from the PVA-based resin according to the invention in that all the hydroxyl groups thereof are secondary hydroxyl groups.

The PVA-based resin containing a 1,2-diol component at a side chain preferably is a PVA-based resin which has a 1,2-diol structural unit represented by the general formula (1). 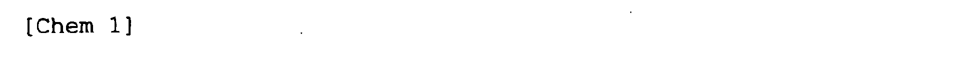 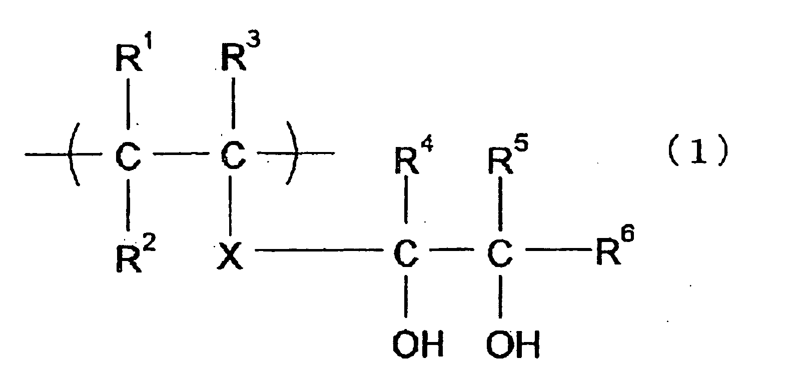 [wherein, R¹, R², and R³ each independently represents a hydrogen atom or an organic group; X represents a single bond or a bonding chain; and R⁴, R⁵, and R⁶ each independently represents a hydrogen atom or an organic group.]

### ADVANTAGES OF THE INVENTION

The dispersion stabilizer for suspension polymerization of a vinyl-based compound of the invention attains excellent dispersion stability during polymerization and, hence, vinyl-based polymer particles having a sharp particle size distribution and a high bulk density are obtained. The stabilizer is reduced in wet-form formation and is effective in diminishing polymer scale deposition on the inner wall of the polymerization vessel and foamy polymer formation, which are attributable to a dry foam. Furthermore, vinyl-based polymer particles with less coloring and zinc burning, which is occasionally seen in flexible-composition formulations, and having excellent heat resistance are obtained with the stabilizer. Therefore, the dispersion stabilizer of the invention is exceedingly useful industrially.
Furthermore, the PVA-based resin according to the invention does not necessitate any heat treatment in the production thereof, in contrast to the PVA-based resins for use in the related-art dispersion stabilizers for suspension polymerization, which each necessitate a heat treatment step in the production thereof. The dispersion stabilizer of the invention hence has a large merit also from the standpoint of production cost.

### BEST MODE FOR CARRYING OUT THE INVENTION

The following explanations on constituent elements are for an embodiment (typical embodiment) of the invention and should not be construed as limiting the invention.
The invention is explained below in detail.

The PVA-based resin to be used in the invention is a PVA-based resin having 1,2-diol structural units represented by the following general formula (1). In the general formula (1), R¹, R², and R³ each independently represents a hydrogen atom or an organic group; X represents a single bond or a bonding chain; and R⁴, R⁵, and R⁶ each independently represents a hydrogen atom or an organic group.

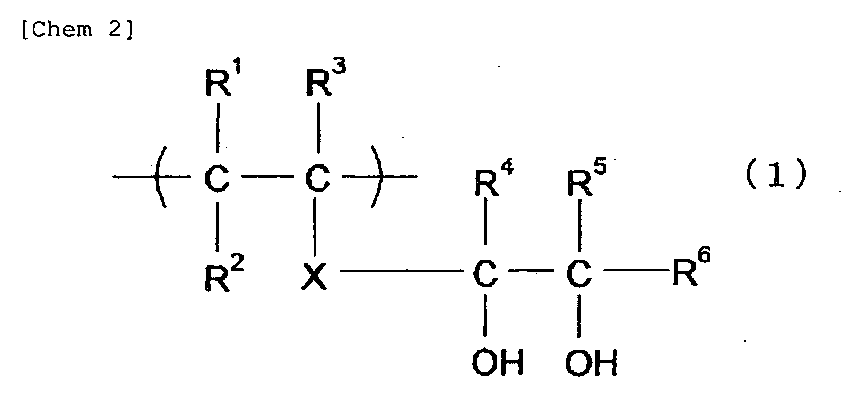

In this PVA-based resin, a content of the 1,2-diol structural units represented by the general formula (1) is preferably about 0.3 to 20% by mol. Like ordinary PVA-based resins, the remaining part of this PVA-based resin comprises vinyl alcohol structural units, which are contained in an amount corresponding to the degree of saponification, and vinyl acetate structural units as the remainder.

It is desirable that all of R¹ to R³ and R⁴ to R⁶ in the 1,2-diol structural units represented by the general formula (1) should be a hydrogen atom. However, the hydrogen atom may be replaced with an organic group in such a degree as not to considerably impair resin properties. The organic group is not particularly limited. However, alkyl groups having 1 to 4 carbon atoms are preferred, such as a methyl group, an ethyl group, an n-propyl group, an isopropyl group, an n-butyl group, an isobutyl group, and a tert-butyl group. It may have a substituent such as, e.g., a halogen group, a hydroxyl group, an ester group, a carboxylic acid group, or a sulfonic acid group according to need.

X in the 1,2-diol structural units represented by the general formula (1) typically is a single bond. However, X may be a bonding chain so long as this does not lessen the effects of the invention. This bonding chain is not particularly limited. Examples thereof include hydrocarbons such as alkylene, alkenylene, alkynylene, phenylene, and naphthylene (these hydrocarbons may be substituted with halogen such as fluorine, chlorine, or bromine). Examples thereof further include -O-, -(CH₂O)ₘ-, -(OCH₂)ₘ-, -(CH₂O)ₘCH₂-, -CO-, -COCO-, -CO(CH₂)ₘCO-, - CO(C₆H₄)CO-, -S-, -CS-, -SO-, -SO₂-, -NR-, -CONR-, -NRCO-, - CSNR-, -NRCS-, -NRNR-, -HPO₄-, -Si(OR)₂-, -OSi(OR)₂-, - OSi(OR)₂O-, -Ti(OR)₂-, -OTi(OR)₂-, -OTi(OR)₂O-, -Al(OR)-, - OAl(OR)-, and -OAl(OR)O- (wherein R each independently represents any desired substituent, and preferably are a hydrogen atom or an alkyl group; and m is a natural number). Preferred of these from the standpoint of stability during production or during use is an alkylene group having 6 or less carbon atoms or -CH₂OCH₂-.

Processes for producing the PVA-based resin to be used in the invention are not particularly limited. However, it is preferred to use (i) a process in which a copolymer of a vinyl ester-based monomer and a compound represented by the following general formula (2) is saponified. 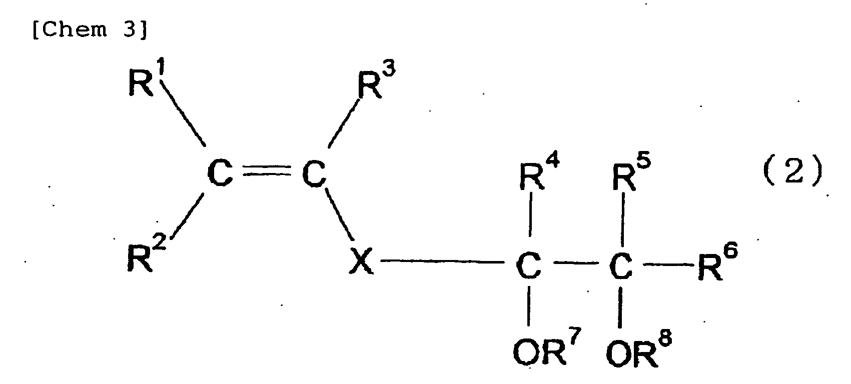 [wherein, R¹, R², and R³ each independently represents a hydrogen atom or an organic group; X represents a single bond or a bonding chain; R⁴, R⁵, and R⁶ each independently represents a hydrogen atom or an organic group; and R⁷ and R⁸ each independently represents a hydrogen atom or R⁹-CO-(wherein R⁹ represents an alkyl group).]

Besides the process (i), use may be made of:
(ii) a process in which a copolymer of a vinyl ester-based monomer and a compound represented by the following general formula (3) is saponified and decarboxylated 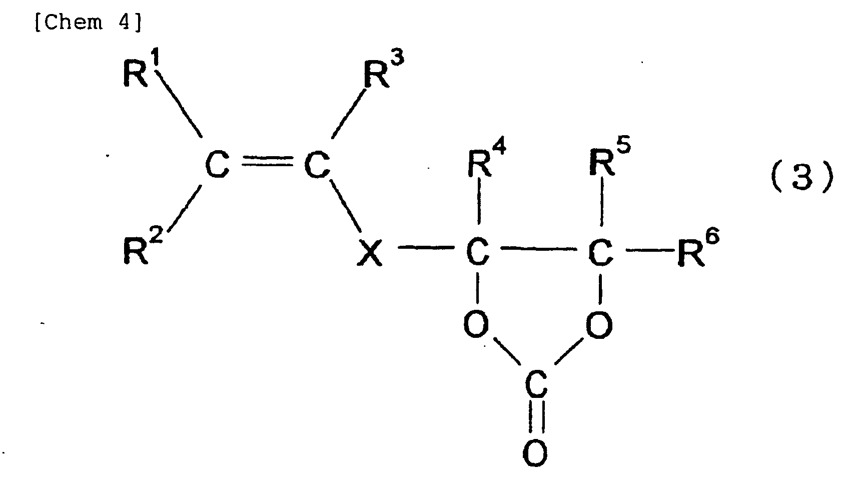 [wherein R¹, R², and R³ each independently represents a hydrogen atom or an organic group; X represents a single bond or a bonding chain; and R⁴, R⁵, and R⁶ each independently represents a hydrogen atom or an organic group]; or
(iii) a process in which a copolymer of a vinyl ester-based monomer and a compound represented by the following general formula (4) is subjected to saponification and solvolysis of ketal structure therefrom 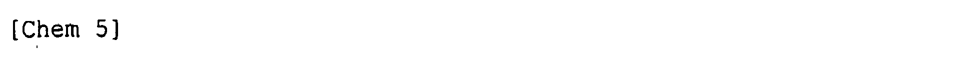 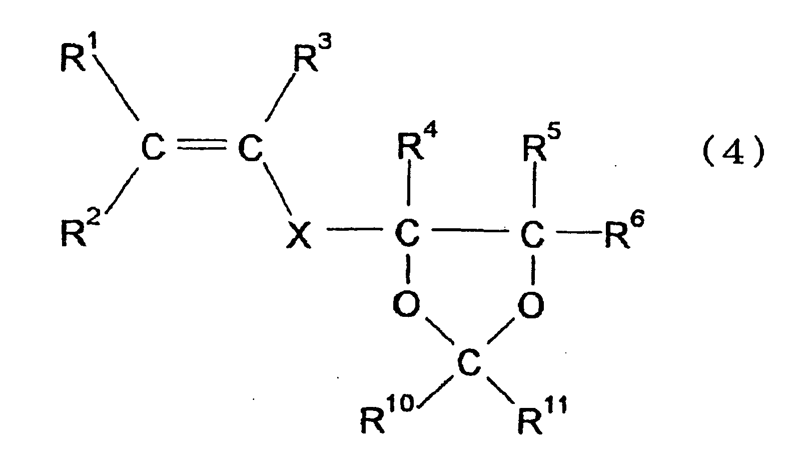
[wherein R¹, R², and R³ each independently represents a hydrogen atom or an organic group; X represents a single bond or a bonding chain; R⁴, R⁵, and R⁶ each independently represents a hydrogen atom or an organic group; and R¹⁰ and R¹¹ each independently represents a hydrogen atom or an organic group].

Examples of the vinyl ester-based monomer to be used in the invention include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate. Of these, vinyl acetate is preferred from the standpoint of profitability.
Those processes (i), (ii), and (iii) are explained below.

### [Process (i)]

Process (i) is a method in which a vinyl ester-based monomer is copolymerized with a compound represented by the general formula (2) and the resultant copolymer is saponified to produce a PVA-based resin having 1,2-diol structural units represented by the general formula (1).
Examples of R¹ to R³, R⁴ to R⁶, and X in the compound represented by the general formula (2) may be the same as those in the general formula (1). R⁷ and R⁸ each independently are a hydrogen atom or R⁹-CO- (wherein R⁹ is an alkyl group, preferably a methyl group, a propyl group, a butyl group, a hexyl group, or an octyl group; this alkyl group may have a substituent such as, e.g., a halogen group, a hydroxyl group, an ester group, a carboxylic acid group, or a sulfonic acid group so long as this does not exert an adverse influence on reactivity in the copolymerization or on the subsequent step).

Examples of the compound represented by formula (2) include compounds in which X is a single bond, such as 3,4-dihydroxy-1-butene, 3,4-diacyloxy-1-butene, 3-acyloxy-4-hydroxy-1-butene, 4-acyloxy-3-hydroxy-1-butene, and 3,4-diacyloxy-2-methyl-1-butene; compounds in which X is an alkylene group, such as 4,5-dihydroxy-1-pentene, 4,5-diacyloxy-1-pentene, 4,5-dihydroxy-3-methyl-1-pentene, 4,5-diacyloxy-3-methyl-1-pentene, 5,6-dihydroxy-1-hexene, and 5,6-diacyloxy-1-hexene; and compounds in which X is - CH₂OCH₂- or -OCH₂-, such as glycerin monoallyl ether, 2,3-diacetoxy-1-allyloxypropane, 2-acetoxy-1-allyloxy-3-hydroxypropane, 3-acetoxy-1-allyloxy-2-hydroxypropane, glycerin monovinyl ether, and glycerin monoisopropenyl ether.

Preferred of those are the compounds in which R¹, R², R³, R⁴, R⁵, and R⁶ each are a hydrogen atom, X is a single bond, R⁷ and R⁸ each are R⁹-CO-, and R⁹ is an alkyl group, i.e., 3,4-diacyloxy-1-butenes. This is because these compounds are superior in reactivity in the copolymerization and industrial handleability. Especially preferred of these is the compound in which R⁹ is a methyl group, i.e., 3,4-diacetoxy-1-butene. In the case where vinyl acetate is copolymerized with 3,4-diacetoxy-1-butene, the reactivity ratio between these monomers is such that r(vinyl acetate)=0.710 and r(3,4-diacetoxy-1-butene)=0.701. This indicates that 3,4-diacetoxy-1-butene has excellent reactivity in copolymerization with vinyl acetate as compared with the case of vinylethylene carbonate which will be described later, in which r(vinyl acetate)=0.85 and r(vinylethylene carbonate)=5.4.

With respect to 3,4-diacetoxy-1-butene, a product of Eastman Chemical Company for industrial production and a product from Acros on a reagent level are available on the market. Also usable is the 3,4-diacetoxy-1-butene obtained as a by-product in a step for 1,4-butanediol production. Furthermore, 3,4-diacetoxy-1-butene may be obtained by a known technique such as, e.g., the method described in, e.g., JP-A-10-212264 in which 1,4-diacetoxy-2-butene is converted to 3,4-diacetoxy-1-butene or the method described in WO 00/24702 in which 3,4-diacetoxy-1-butene is obtained from 1,3-butadiene via a monoepoxide.

Techniques for this copolymerization of a vinyl ester-based monomer and a compound represented by the general formula (2) are not particularly limited, and a known technique may be employed, such as, e.g., bulk polymerization, solution polymerization, suspension polymerization, dispersion polymerization, or emulsion polymerization. In general, however, solution polymerization is conducted.
Methods for adding the monomer ingredients at the copolymerization are not particularly limited, and any method may be employed, such as, e.g., adding all at once, adding divisionally, or adding continuously. However, dropping polymerization is preferred because a polyvinyl ester-based polymer having 1,2-diol structural units derived from the compound represented by the general formula (2) and evenly distributed in the molecular chain of the polymer can be obtained by the technique. Especially preferred is a method of polymerization based on a HANNA method employing the ratio concerning reactivity with vinyl acetate described above.

Examples of solvents usable in the copolymerization generally include lower alcohols such as methanol, ethanol, isopropyl alcohol, n-propanol, and butanol and ketones such as acetone and methyl ethyl ketone. Methanol is industrially preferred to be used.
The amount of the solvent to be used may be suitably selected according to the target degree of polymerization of the copolymer while taking account of a chain transfer constant of the solvent. For example, in the case where the solvent is methanol, the amount of the solvent to be used may be selected so that the S (solvent)/M (monomer) ratio is in the range of about 0.01 to 10 (by weight), preferably about 0.05 to 3 (by weight).

A polymerization catalyst is used for the copolymerization. Examples of the polymerization catalyst include known radical polymerization catalysts such as azobisisobutyronitrile, acetyl peroxide, benzoyl peroxide, and lauryl peroxide and low-temperature-active radical polymerization catalysts such as azobisdimethylvaleronitrile and azobismethoxydimethylvaleronitrile. The amount of the polymerization catalyst to be used cannot be categorically specified because it varies depending on the kinds of the comonomers and the kind of the catalyst. However, the amount thereof may be arbitrarily selected according to a rate of polymerization. For example, in the case of using azoisobutyronitrile or acetyl peroxide, the amount thereof is preferably 0.01 to 0.7% by mol, especially preferably 0.02 to 0.5% by mol, based on the vinyl ester-based monomer.
The temperature at which the copolymerization reaction is to be conducted may be in the range of about from 30°C to the boiling point according to the solvent and pressure to be used. More specifically, the reaction may be conducted at a temperature in the range of 35 to 150°C, preferably 40 to 75°C.

The copolymer obtained is subsequently saponified. In this saponification, the copolymer obtained above is dissolved in a solvent, e.g., an alcohol, and an alkali catalyst or acid catalyst is used to saponify the copolymer. Typical examples of the solvent include methanol, ethanol, propanol, and tert-butanol. However, it is especially preferred to use methanol. The concentration of the copolymer in the alcohol may be suitably selected according to the viscosity of the system. In general, however, a concentration is selected from the range of 10 to 60% by weight. Examples of the catalyst to be used for the saponification include alkali catalysts such as alkali metal hydroxides or alcoholates, e.g., sodium hydroxide, potassium hydroxide, sodium methylate, sodium ethylate, potassium methylate, and lithium methylate, and acid catalysts such as sulfuric acid, hydrochloric acid, nitric acid, methanesulfonic acid, zeolites, and cation-exchange resins.

The amount of the saponification catalyst to be used may be suitably selected according to the method of saponification, target degree of saponification, etc. However, in the case of using an alkali catalyst, an appropriate range of the amount thereof is generally 0.1 to 30 mmol, preferably 2 to 17 mmol based on 1 mol of the sum of the vinyl ester-based monomer and the 1,2-diol structural units derived from the compound represented by the formula (4).
The temperature at which the saponification reaction is to be conducted is not particularly limited. However, the reaction temperature is preferably 10 to 60°C, more preferably 20 to 50°C.

### [Process (ii)]

Process (ii) is a method in which a vinyl ester-based monomer is copolymerized with a compound represented by the general formula (3) and the resultant copolymer is saponified and decarboxylated to produce a PVA-based resin having 1,2-diol structural units represented by the general formula (1).
Examples of R¹ to R³, R⁴ to R⁶, and X in the compound represented by the general formula (3) to be used in the invention may be the same as those in the general formula (1). Preferred of such compounds is the compound in which R¹, R², R³, R⁴, R⁵, and R⁶ are a hydrogen atom and X is a single bond, i.e., vinylethylene carbonate. This is because vinylethylene carbonate is easily available and has satisfactory suitability for the copolymerization.

The copolymerization of a vinyl ester-based monomer and a compound represented by the general formula (3) and the saponification may be conducted in the same manners as in process (i) described above.
With respect to the decarboxylation, it undergoes decarboxylation simultaneously with the saponification without necessitating any special treatment. As a result, the ethylene carbonate ring opens and is thus converted to a 1,2-diol structure.
It is possible to conduct decarboxylation at a given pressure (ordinary pressure to 1×10⁷ Pa) and a high temperature (50 to 200°C) without saponifying the vinyl ester moieties. In this case, the saponification may be conducted after this decarboxylation.

### [Process (iii)]

Process (iii) is a method in which a vinyl ester-based monomer is copolymerized with a compound represented by the general formula (4) and the resultant is subjected to saponification and solvolysis of ketal structure therefrom to produce a PVA-based resin having 1,2-diol structural units represented by the general formula (1).
Examples of R¹ to R³, R⁴ to R⁶, and X in the compound represented by the general formula (4) to be used in the invention may be the same as those in the general formula (1). R¹⁰ and R¹¹ each independently are a hydrogen atom or an alkyl group. This alkyl group is not particularly limited. However, the alkyl group preferably is an alkyl group having 1 to 4 carbon atoms such as, e.g., a methyl group, an ethyl group, an n-propyl group, an isopropyl group, an n-butyl group, an isobutyl group, or a tert-butyl group. This alkyl group may have a substituent such as, e.g., a halogen group, a hydroxyl group, an ester group, a carboxylic acid group, or a sulfonic acid group so long as this does not inhibit reactivity in the copolymerization, etc. Preferred of such compounds are the compounds in which R¹, R², R³, R⁴, R⁵, and R⁶ each are a hydrogen atom, X is a single bond, and R¹⁰ and R¹¹ each are an alkyl group, i.e., 2,2-dialkyl-4-vinyl-1,3-dioxolane. This is because these compounds are easily available and have satisfactory suitability for the copolymerization. Especially preferred of these is the compound in which R¹⁰ and R¹¹ each are a methyl group, i.e., 2,2-dimethyl-4-vinyl-1,3-dioxolane.

The copolymerization of a vinyl ester-based monomer and a compound represented by the general formula (4) and the saponification of the resultant may be conducted in the same manners as in process (i) described above.
The solvolysis of ketal structure may be conducted in the following manner. In the case where the saponification reaction is conducted using an alkali catalyst, after the saponification it is further subjected to solvolysis of ketal structure with an acid catalyst in an aqueous solvent (e.g., water, water/acetone, or a mixed solvent containing a lower alcohol such as water/methanol) to convert into a 1,2-diol structure. Examples of the acid catalyst in this case include acetic acid, hydrochloric acid, sulfuric acid, nitric acid, methanesulfonic acid, zeolites, and cation-exchange resins.
In the case where the saponification reaction is conducted using an acid catalyst, it undergoes solvolysis of ketal structure simultaneously with the saponification without necessitating any special treatment. As a result, it is converted to a 1,2-diol structure.

The PVA-based resin to be used in the invention may be one in which any of various unsaturated monomers is copolymerized so long as this does not defeat an object of the invention. The amount of such an unsaturated monomer to be introduced cannot be categorically specified. However, too large amounts thereof are undesirable because there are cases where the resultant has impaired water solubility or reduced gas barrier properties.
Examples of the unsaturated monomers include olefins such as ethylene, propylene, isobutylene, α-octene, α-dodecene, and α-octadecene; unsaturated acids such as acrylic acid, methacrylic acid, crotonic acid, maleic acid, maleic anhydride, and itaconic acid and salts and monoesters or diesters of these acids; nitriles such as acrylonitrile and methacrylonitrile; amides such as diacetoneacrylamide, acrylamide, and methacrylamide; olefinsulfonic acids such as ethylenesulfonic acid, allylsulfonic acid, and methallylsulfonic acid or salts of these acids; vinyl compounds such as alkyl vinyl ethers, dimethylallyl vinyl ketone, N-vinylpyrrolidone, and vinyl chloride; substituted vinyl acetates such as isopropenyl acetate and 1-methoxyvinyl acetate; and vinylidene chloride, 1,4-diacetoxy-2-butene, vinylene carbonate, and acetoacetyl group-containing monomers.

Examples thereof further include polyoxyalkylene group-containing monomers, such as polyoxyethylene (meth)allyl ether, polyoxyethylene (meth)acrylamide, polyoxypropylene (meth)acrylamide, polyoxyethylene (meth)acrylate, polyoxypropylene (meth)acrylate, polyoxyethylene(1-(meth)acrylamido-1,1-dimethylpropyl) ester, polyoxyethylene vinyl ether, polyoxypropylene vinyl ether, polyoxyethylene allylamine, polyoxypropylene allylamine, polyoxyethylene vinylamine, and polyoxypropylene vinylamine; and cationic group-containing monomers, such as N-acrylamidomethyltrimethylammonium chloride, N-acrylamidoethyltrimethylammonium chloride, N-acrylamidopropyltrimethylammonium chloride, 2-acryloxyethyltrimethylammonium chloride, 2-methacryloxyethyltrimethylammonium chloride, 2-hydroxy-3-methacryloyloxypropyltrimethylammonium chloride, allyltrimethylammonium chloride, methallyltrimethylammonium chloride, 3-butenetrimethylammonium chloride, dimethyldiallylammonium chloride, and diethyldiallylammonium chloride.
A PVA-based resin containing about 1.6 to 3.5% by mol 1,2-diol bonds incorporated in the main chain thereof by conducting polymerization at a temperature of 100°C or higher can be used.

The PVA-based resin thus obtained has a degree of saponification of 65 to 87% by mol. The degree of saponification thereof is preferably 68 to 83% by mol, especially preferably 69 to 81% by mol. Too low degrees of saponification thereof are undesirable because there are cases where the saponification of side-chain diacyloxy moieties, which are formed when a 3,4-diacyloxy-1-butene is used as a comonomer, is insufficient or where the resultant has reduced water solubility. Furthermore, too high or too low degrees of saponification thereof are undesirable because it may give a vinyl chloride-based resin which includes coarse particles or has a widened particle size distribution. The term degree of saponification in the invention is defined as the proportion of the number of moles of hydroxyl groups to the sum (mol) of the modifying group parts, such as those derived from a 3,4-diacyloxy-1-butene, and the vinyl ester, e.g., vinyl acetate.

The average degree of polymerization of the PVA-based resin according to the invention (determined in accordance with JIS K 6726) is preferably 400 to 850, more preferably 500 to 850, especially 600 to 830. Too low average degrees of polymerization thereof are undesirable because this PVA-based resin may be insufficient in the ability to function as a protective colloid. Conversely, too high average degrees of polymerization thereof are undesirable because there are cases where it gives a vinyl chloride-based resin showing reduced plasticizer absorption.

The content of 1,2-diol components in the PVA-based resin according to the invention is preferably 1 to 20% by mol, more preferably 1 to 8% by mol, especially preferably 1 to 6% by mol, in particular 2 to 6% by mol. In case where the content thereof is too low, a wet foam forms in the initial period of suspension polymerization of vinyl chloride or a dry foam forms in the middle and later periods of the polymerization to cause scale deposition on the inner wall of the polymerization vessel. The scale inhibits the removal of the heat of polymerization reaction to reduce productivity. Furthermore, a scale may detach from the inner wall of the polymerization vessel and come into the vinyl chloride-based resin product to cause fish-eyes during molding. Too low contents thereof are hence undesirable. On the other hand, too high contents thereof are undesirable because there are cases where polymerization becomes instable under some suspension polymerization conditions to give a vinyl chloride-based resin including coarse particles or reduced in quality, e.g., plasticizer absorption.

Examples of methods for introducing 1,2-diol components into a PVA-based resin include a method by copolymerization as in the invention and a method in which polymerization is conducted at a high temperature to increase the proportion of head-head bonds and thereby introduce into the main chain as described above. In the latter method, however, there are limitations on the amount thereof which can be introduced. Introduction in an amount of 3% by mol or larger is actually impossible by the latter method. However, since the PVA-based resin according to the invention is one produced by the former method, the content of 1,2-diol components can be regulated to any desired value within the range shown above.

The PVA-based resin to be used in the invention may be a mixture with another PVA-based resin of a different kind. Examples of the different PVA-based resin include one differing in the content of 1,2-diol structural units represented by the general formula (1), one differing in the degree of saponification, one differing in the degree of polymerization, and one differing in other comonomer ingredient.

The PVA-based resin according to the invention preferably is a PVA-based resin containing a carbonyl group in a molecule. Processes for producing this PVA-based resin containing a carbonyl group in the molecule are not particularly limited. Examples thereof include: a method in which a PVA-based resin obtained by the method described above is oxidized with an oxidizing agent such as hydrogen peroxide; a method in which the polymerization described above is conducted in the presence of a chain-transfer agent containing a carbonyl group, such as an aldehyde or ketone, and the resultant is saponified; a method in which the polymerization described above is conducted in the presence of 1-methoxyvinyl acetate or the like and the resultant is saponified; and a method in which air is bubbled into the system during the polymerization described above to obtain polyvinyl acetate and this is saponified. Especially advantageous industrially is the method in which the polymerization is conducted in the presence of a chain-transfer agent containing a carbonyl group, such as an aldehyde or ketone, and the polyvinyl acetate obtained is saponified to obtain a PVA-based resin containing a carbonyl group.

Examples of the chain-transfer agent include aldehydes such as acetaldehyde, propionaldehyde, n-butyraldehyde, benzaldehyde, and crotonaldehyde and ketones such as acetone, methyl ethyl ketone, hexanone, and cyclohexanone. Preferred of these, from the standpoint of ease of the control of chain transfer from vinyl acetate to the carbonyl compound, are acetaldehyde, benzaldehyde, propionaldehyde, and n-butyraldehyde. Such chain-transfer agents may be used alone or in combination of two or more thereof.

The amount of the chain-transfer agent to be added is regulated according to the chain transfer constant of the chain-transfer agent to be added, the target degree of polymerization of the PVA-based resin, etc. In general, however, the amount thereof is preferably 0.05 to 5% by weight, more preferably 0.1 to 3% by weight based on the fatty acid vinyl ester-based monomer, e.g., vinyl acetate. The chain-transfer agent may be added all at once in the initial period of the polymerization or may be added in the course of the polymerization. By adding the chain-transfer agent by a desired method, the molecular weight distribution of the PVA-based resin can be controlled.

The amount of carbonyl groups contained in the PVA-based resin according to the invention is preferably 0.005 to 0.3% by mol, more preferably 0.01 to 0.2% by mol, especially 0.03 to 0.15% by mol. Too low contents of carbonyl groups are undesirable because this PVA-based resin the ability to function as a protective colloid, as a dispersant, is reduced. Conversely, to introduce excess carbonyl groups is undesirable because this results in a PVA-based resin having an exceedingly low degree of polymerization.

The ability of the PVA-based resin to function as a protective colloid, when it is used as a stabilizer for suspension polymerization, can be controlled by regulating the amount of conjugated double bonds to be formed by subjecting vinyl alcohol or vinyl acetate structural units each adjoining such a carbonyl group to dehydration/acetic acid removal therefrom. Generally used as indexes to the content thereof are absorbances respectively at 215 nm [assigned to the structure -CO-CH=CH-], 280 nm [assigned to the structure -CO-(CH=CH)₂-], and 320 nm [assigned to the structure -CO-(CH=CH)₃-] in an ultraviolet absorption spectrum of a 0.1% by weight aqueous solution of the PVA-based resin. The PVA-based resin according to the invention preferably is one in which the absorbance at 280 nm is 0.005 or higher, especially 0.01 or higher. Too low values of this absorbance are undesirable because it results in insufficient stability in suspension polymerization to yield coarse particles or give a widened particle size distribution.

In producing the PVA-based resin according to the invention, it is preferred to conduct alkali saponification in the polyvinyl acetate saponification step in the presence of a solvent having a permittivity of 32 or lower. A more preferred permittivity range is 6 to 29, and an especially preferred permittivity range is 12 to 28. The permittivity exceeding 32 is undesirable because the resultant PVA-based resin has a reduced block character regarding acetic acid groups remaining in the fatty acid ester groups in the resin. There are hence cases where this PVA-based resin is insufficient in the ability to function as a protective colloid when used as a stabilizer for suspension polymerization of vinyl chloride-based resin. The resultant vinyl chloride-based resin may include coarse particles or have a widened particle size distribution.

Examples of the solvent having a permittivity of 32 or lower include methanol (31.2), methyl acetate/methanol = 1/3 (27.1), methyl acetate/methanol = 1/1 (21.0), methyl acetate/methanol = 3/1 (13.9), methyl acetate (7.03), isopropyl acetate (6.3), trichloroethylene (3.42), xylene (2.37), toluene (2.38), benzene (2.28), and acetone (21.4). Preferred of these are the methyl acetate/methanol mixed solvents.

A method of suspension polymerization of a vinyl-based compound with the dispersion stabilizer of the invention is explained below with respect to the polymerization of a vinyl chloride-based monomer as an example. The term vinyl chloride-based monomer means not only vinyl chloride alone but also a mixture of at least 50% by weight vinyl chloride and one or more other monomers copolymerizable therewith.

For practicing the method of suspension polymerization with the dispersion stabilizer of the invention, any technique used in the ordinary suspension polymerization of vinyl chloride-based monomers can be employed.

With respect to methods for adding the PVA-based resin as the dispersion stabilizer of the invention to the polymerization system in suspension polymerization, the PVA-based resin may be added as it is, i.e., as a powder, or in a solution form. The PVA-based resin may be added all at once in the initial period of the polymerization or added divisionally in the course of the polymerization.

The amount of the PVA-based dispersant to be used is not particularly limited. In general, however, the amount thereof is preferably 5 parts by weight or smaller, more preferably 0.01 to 1 part by weight, even more preferably 0.02 to 0.2 parts by weight based on 100 parts by weight of the vinyl chloride-based monomer.

In suspension polymerization, the dispersion stabilizer of the invention may be used in combination with any of various known secondary dispersant.

Preferred secondary dispersant is lowly saponified PVA-based resins having a degree of saponification lower than 65% by mol and an average degree of polymerization of 100 to 750, in particular, ones having a degree of saponification of 30 to 60% by mol and an average degree of polymerization of 180 to 900.

Also usable is a secondary dispersant which is water-soluble or water-dispersible and is a PVA-based resin having a low degree of saponification to which self-emulsifiability has been imparted by introducing, e.g., ionic groups such as carboxylic acid groups or sulfonic acid groups into side chains or molecular ends of the resin. Examples thereof include secondary dispersant such as "Gohsefimer LL-02", "Gohsefimer L-5407", "Gohsefimer L-7514", "Gohsefimer LW100", "Gohsefimer LW200", "Gohsefimer LW300", and "Gohsefimer LS210" (manufactured by The Nippon Synthetic Chemical Industry), and further include "LM-20", "LM-25", "LM-10HD" (manufactured by Kuraray Co., Ltd.), "Alcotex 55-002H", "Alcotex WD100", "Alcotex WD200", "Alcotex 55-002P" (manufactured by Synthomer), "Sigma 404W", "Sigma 202" (manufactured by Sigma), and various secondary dispersant manufactured by CIRS.

The weight ratio of the addition amount of the PVA dispersion stabilizer of the invention to that of the secondary dispersant cannot be categorically specified because it varies depending on the kind of the dispersant, etc. However, the weight ratio thereof is preferably in the range of from 90/10 to 30/70, especially preferably 80/20 to 50/50.

By using a secondary dispersant in combination, not only the vinyl chloride-based resin particles being obtained can be prevented from coming to have a thick skin layer on the surface thereof but also the aggregation of basic particles having a size on the order of one to several micrometers (primary particles) in each particle can be controlled. As a result, a vinyl chloride-based resin further improved in properties such as porosity distribution, plasticizer absorption, and monomer removability is obtained.

As a suspension polymerization catalyst, any oil-soluble catalyst may be used. For example, a catalyst in use for the ordinary suspension polymerization of vinyl chloride-based monomers can be employed, such as benzoyl peroxide, lauroyl peroxide, diisopropyl peroxydicarbonate, α·α'-azobisisobutyronitrile, α·α'-azobis-2,4-dimethylvaleronitrile, acetylcyclohexylsulfonyl peroxide, or a mixture thereof. Such catalysts may be used alone or in combination of two or more thereof.

The dispersion stabilizer of the invention can be used in combination with another known dispersant, for example, a polymeric substance which has been used as a dispersion stabilizer for suspension polymerization of a vinyl-based compound. Examples of such other dispersion stabilizers include PVA-based resins other than the PVA-based resin according to the invention, such as PVA-based resins each having an average degree of polymerization of 100 to 4,500 and a degree of saponification of 65 to 100% by mol, and derivatives of such PVA-based resins. Examples of the PVA-based resin derivatives include PVA formalized PVA, acetalized PVA, butyralized PVA, or urethanated PVA and PVA esters with a sulfonic acid, carboxylic acid, or the like. Examples of the other dispersion stabilizers further include the saponification product of copolymers of a vinyl ester and a monomer copolymerizable therewith. Examples of the copolymerizable monomer include olefins such as ethylene, propylene, isobutylene, α-octene, α-dodecene, and α-octadecene; unsaturated acids such as acrylic acid, methacrylic acid, crotonic acid, maleic acid, maleic anhydride, and itaconic acid or salts and mono- or dialkyl esters of these acids; nitriles such as acrylonitrile and methacrylonitrile; amides such as acrylamide and methacrylamide; olefinsulfonic acids such as ethylenesulfonic acid, allylsulfonic acid, and methallylsulfonic acid or salts of these acids; and alkyl vinyl ethers, vinyl ketone, N-vinylpyrrolidone, vinyl chloride, and vinylidene chloride. However, the PVA-based dispersion stabilizer should not be construed as being limited to these examples.

Examples of the polymeric substance which is not the PVA-based resin and is known as a dispersant include cellulose derivatives such as methyl cellulose, ethyl cellulose, hydroxymethyl cellulose, hydroxypropyl cellulose, hydroxybutyl methyl cellulose, hydroxyethyl cellulose, carboxymethyl cellulose, aminomethyl hydroxypropyl cellulose, and aminoethyl hydroxypropyl cellulose, starch, tragacanth, pectin, glue, alginic acid or salts thereof, gelatin, polyvinylpyrrolidone, polyacrylic acid or salts thereof, polymethacrylic acid or salts thereof, polyacrylamide, polymethacrylamide, copolymers of vinyl acetate and an unsaturated acid such as maleic acid, maleic anhydride, acrylic acid, methacrylic acid, itaconic acid, fumaric acid, or crotonic acid, copolymers of styrene and any of these unsaturated acids, copolymers of vinyl ether and any of those unsaturated acids, and salts or esters of these copolymers.

Various surfactants, inorganic dispersants, and the like may also be suitably used as an aid during the suspension polymerization. Furthermore, in the case of a degree of saponification lower than 65% by mol is used, it is possible to use the PVA-based resin according to the invention as an aid.

In the suspension polymerization, a chain-transfer agent which has been employed in the ordinary suspension polymerization of vinyl chloride-based monomers, such as mercaptoethanol or carbon tetrachloride, can be used.

The temperature of the aqueous medium to be used in the suspension polymerization of a vinyl chloride-based monomer is not particularly limited. Use may be made of hot water having a temperature of about 97°C, not to mention ordinary-temperature water of about 20°C. It is, however, preferred to use a method in which water which has been heated beforehand is used for the polymerization in place of ordinary-temperature water in order to shorten heating time for polymerization (hot-charge method). When this method is employed, it is preferred to use water which has been heated to 40 to 97°C beforehand, preferably 40 to 85°C.

The polymerization temperature at the suspension polymerization may be arbitrarily selected from a range known to persons skilled in the art according to the target degree of polymerization of the vinyl-based resin to be obtained. Usually, a temperature of 30 to 80°C is preferred. The suspension polymerization is conducted in a monomer/water weight ratio generally in the range of 0.5 to 1.2. However, water may be additionally added during the polymerization to compensate for a liquid-surface descent resulting from volume contraction by the polymerization. This method is preferred because it is effective in inhibiting the formation of fish-eyes.

The polymerization pressure at the suspension polymerization may be arbitrarily selected from a range known to persons skilled in the art according to the target degree of polymerization of the vinyl-based resin to be obtained and the polymerization temperature.

For stirring during the suspension polymerization, use can be made of a stirrer which is not special but a known one which has been in general use in methods of the suspension polymerization of a vinyl chloride-based monomer. Stirring blades in general use may be employed, such as Pfaudler blades, paddle blades, turbine blades, fan turbine blades, and brumargin blades. However, it is especially preferred to use Pfaudler blades. Furthermore, there are no particular limitations on combination with a baffle. Examples of the baffle include plate type, cylindrical, D type, loop type, and finger type baffles.

In the suspension polymerization of a vinyl chloride-based monomer, not only the polymerization of vinyl chloride alone but also the copolymerization of vinyl chloride with a monomer copolymerizable therewith is conducted. Examples of the copolymerizable monomer include vinylidene halides, vinyl ether, vinyl acetate, vinyl benzoate, acrylic acid, methacrylic acid and esters thereof, maleic acid or its anhydride, ethylene, propylene, and styrene.

A polymerization regulator, anti-gelling agent, antistatic agent, pH controller, and the like which have been suitably used may be optionally added during the suspension polymerization of a vinyl chloride-based monomer.

By using the dispersant of the invention, foaming during suspension polymerization can be inhibited. In addition, a vinyl chloride-based resin having excellent properties is obtained while preventing the quality characteristics (particle diameter, particle diameter distribution, plasticizer absorption, etc.) of the vinyl chloride-based resin from being influenced by the temperature of the added warm water during the polymerization.

Suspension polymerization with the dispersion stabilizer of the PVA-based resin of the invention was explained above mainly with respect to the polymerization of a vinyl chloride-based monomer. However, use of the PVA-based dispersion stabilizer of the invention should not be construed as being limited to the polymerization of vinyl chloride-based monomers. The stabilizer is usable also in the suspension polymerization of any desired vinyl-based compounds such as aromatic vinyl compounds, e.g., styrene, acrylic acid or methacrylic acid and derivatives of these, vinyl ester compounds such as vinyl acetate, and ethylene/vinyl acetate.

The dispersion stabilizer for suspension polymerization of the invention can be used also as a dispersion stabilizer in microsuspension polymerization.
In this case also, the same satisfactory foaming-inhibiting effect is obtained. Monomers usable in this microsuspension polymerization are not particularly limited so long as they are vinyl-based compounds. Examples thereof include vinyl halide compounds such as vinyl chloride, aromatic vinyl compounds such as styrene, vinyl ester compounds and copolymers thereof such as vinyl acetate and ethylene/vinyl acetate, and acrylic acid or methacrylic acid and derivatives thereof.

### EXAMPLES

The invention will be explained below by reference to Examples. However, the invention should not be construed as being limited to the following Examples unless the invention departs from the spirit thereof.
In the following Examples and Comparative Examples, "parts" and "%" are by weight unless otherwise indicated.

### EXAMPLE 1

Into a reaction vessel equipped with a reflux condenser, dropping funnel, and stirrer were added 1,000 g of vinyl acetate, 100 g of methanol, 80 g (4 mol%) of 3,4-diacetoxy-1-butene, and 5.8 g of acetaldehyde. Azobisisobutyronitrile was introduced thereinto in an amount of 0.05 mol% (based on the vinyl acetate added), and the temperature thereof was elevated in a nitrogen stream with stirring to initiate polymerization. At the time when the rate of polymerization reached 90.5%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 45% (permittivity of the saponification solvent, 24.0). This solution was added into a kneader. While the temperature of the solution was kept at 40°C, a 2% methanol solution of sodium hydroxide was added to the copolymer solution in an amount of 5 mmol per mol of the sum of the vinyl acetate structural units and 3,4-diacetoxy-1-butene structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.

The PVA-based resin obtained was examined for property values by the following methods. The results obtained are shown in Table 1.

### [Degree of Saponification]

The degree of saponification of the PVA-based resin obtained was determined from the amount of an alkali consumed by the hydrolysis of residual vinyl acetate structural units.

### [Average Degree of Polymerization]

The average degree of polymerization of the PVA-based resin obtained was determined in accordance with JIS K 6726.

### [Content of 1,2-Diol Structural Units]

The content of 1,2-diol structural units in the PVA-based resin obtained was determined by completely saponifying the PVA-based resin, analyzing by ¹H-NMR, and calculating the content of the units. For the NMR measurement, use was made of "AVANCE DPX400", manufactured by Bruker Japan.

### [Content of Carbonyl Group]

It was determined in the following manner based on the method described in Koubunshi Kagaku, Vol.15, No.156, pp.249-254 (1958). The PVA-based resin obtained was completely saponified and converted to a PVA hydrazone using p-nitrophenylhydrazine. Thereafter, an aqueous solution thereof was examined for absorbance at 405 nm, and the content was calculated therefrom.

### [Absorbance]

The absorbance at 280 nm of a 0.1% by weight of the PVA-based resin obtained was determined with "Ultraviolet/Visible/Near-Infrared Spectrophotometer V-560", manufactured by JASCO Corporation, using a sample vessel (cell) having a thickness of 1 cm.

Subsequently, the PVA-based resin obtained was evaluated for the following properties.

### <Foaming of Aqueous Solution>

Into a measuring cylinder having a capacity of 1 L was introduced 200 mL of a 1% aqueous solution of the PVA-based resin. The temperature of the solution was regulated to 40°C. Thereafter, a diffuser stone was placed in a liquid-bottom part, and air was bubbled into the solution at 0.2 L/min for 5 minutes to foam the solution. After the air bubbling was stopped, the time period required for the foam to disappear completely was measured and evaluated based on the following. The results obtained are shown in Table 1.
A: Disappeared in 8 minutes.
B: Disappeared in a period of more than 8 minutes and 10 minutes or less.
C: Disappeared in a period of more than 10 minutes and 30 minutes or less.
D: Not disappeared in 30 minutes.

### <Suspension Polymerization of Vinyl Chloride>

Into a polymerization vessel equipped with a reflux condenser and having a capacity of 2,000 L were added 450 g of the PVA-based resin obtained, 260 g of di-2-ethylhexyl peroxydicarbonate, 900 kg of deionized water, and 600 kg of vinyl chloride monomer. Hot water was passed through a jacket to heat the contents to 57°C with stirring to initiate polymerization. The internal pressure of the polymerization vessel at the time of polymerization initiation was 7.0 kg/cm²G. At the time when the pressure of the polymerization vessel decreased to 6.0 kg/cm²G, the monomer remaining unreacted was recovered. The resultant polymer slurry was taken out of the vessel, dehydrated, and dried to obtain a vinyl chloride-based resin.
The vinyl chloride-based resin obtained was evaluated for the following properties. The results obtained are shown in Table 2.

### [Particle Size Distribution]

20 kg of the vinyl chloride-based resin obtained was classified with JIS standard sieves (JIS Z 8801) to determine the contents (wt%) of coarse particles which did not pass through a 42-mesh sieve and of fine particles which passed through a 250-mesh sieve.

### [Scale Deposition State (dry-foam formation state)]

The formation state of a dry foam in the polymerization vessel was examined by observing the reflux condenser for scale deposition thereon, and evaluated based on the following.
A: No scale deposition was observed.
B: Scale deposition was observed in a small amount.
C: Scale deposition was observed in a large amount.

### [Amount of Foamy polymer]

10 kg of the vinyl chloride-based resin was examined using a JIS standard sieve (JIS Z 8801) for the content (wt%) of coarse particles which did not pass through a 48-mesh sieve.

### [Bulk Density]

The bulk density of the vinyl chloride-based resin obtained was measured in accordance with JIS K 6721.

### [Initial Coloration and Heat Resistance]

100 parts of the vinyl chloride-based resin obtained was subjected to roll kneading at 140°C for 10 minutes together with 35 parts of DOP (dioctyl phthalate), 1 part of epoxidized soybean oil, and 2 parts of a barium-zinc-based stabilizer. Thereafter, the resultant was molded into 0.65 mm-thick sheets with an extruder. Subsequently, eight of the sheets were stacked up and hot-pressed at 180°C for 5 minutes to produce a pressed plate. The surfaces of this pressed plate were visually examined for coloration, and evaluated based on the following (initial coloration).
Furthermore, the pressed plate was allowed to stand in a 190°C Geer oven for 50 minutes and then evaluated for coloration in the same manner (heat resistance).
A: No coloration was observed at all.
B: Slight coloration was observed.
C: Coloration was observed.

### EXAMPLE 2

Into a reaction vessel equipped with a reflux condenser, dropping funnel, and stirrer were added 1,000 g of vinyl acetate, 100 g of methanol, 164 g (8.2 mol%) of 3,4-diacetoxy-1-butene, and 1.6 g of acetaldehyde. Azobisisobutyronitrile was added thereinto in an amount of 0.05 mol% (based on the vinyl acetate added), and the temperature was elevated in a nitrogen stream with stirring to initiate polymerization. At the time when the rate of polymerization reached 91.5%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 45% (permittivity of the saponification solvent, 24.0). This solution was introduced into a kneader. While the temperature of the solution was kept at 40°C, a 2% methanol solution of sodium hydroxide was added in an amount of 6 mmol per mol of the sum of the vinyl acetate structural units and 3,4-diacetoxy-1-butene structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 1. The resin was evaluated in the same manners as in Example 1, and the results obtained are shown in Table 2.

### EXAMPLE 3

Into a reaction vessel equipped with a reflux condenser, dropping funnel, and stirrer were added 1,000 g of vinyl acetate, 100 g of methanol, 18 g (0.9 mol%) of 3,4-diacetoxy-1-butene, and 8.6 g of acetaldehyde. Azobisisobutyronitrile was added thereinto in an amount of 0.05 mol% (based on the vinyl acetate added), and the temperature was elevated in a nitrogen stream with stirring to initiate polymerization. At the time when the rate of polymerization reached 95.0%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 45% (permittivity of the saponification solvent, 24.0). This solution was added into a kneader. While the temperature of the solution was kept at 40°C, a 2% methanol solution of sodium hydroxide was added in an amount of 5 mmol per mol of the sum of the vinyl acetate structural units and 3,4-diacetoxy-1-butene structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 1. The resin was evaluated in the same manners as in Example 1, and the results obtained are shown in Table 2.

### EXAMPLE 4

Into a reaction vessel equipped with a reflux condenser, dropping funnel, and stirrer were added 1,000 g of vinyl acetate, 400 g of methanol, and 90 g (4.5 mol%) of 3,4-diacetoxy-1-butene. Azobisisobutyronitrile was added thereinto in an amount of 0.08 mol% (based on the vinyl acetate added), and the temperature was elevated in a nitrogen stream with stirring to initiate polymerization. At the time when the rate of polymerization reached 94.7%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 45% (permittivity of the saponification solvent, 24.0). This solution was added into a kneader. While the temperature of the solution was kept at 40°C, a 2% methanol solution of sodium hydroxide was added in an amount of 5 mmol per mol of the sum of the vinyl acetate structural units and 3,4-diacetoxy-1-butene structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 1. The resin was evaluated in the same manners as in Example 1, and the results obtained are shown in Table 2.

### EXAMPLE 5

Into a reaction vessel equipped with a reflux condenser, dropping funnel, and stirrer were added 1,000 g of vinyl acetate, 500 g of methanol, 70 g (3.5 mol%) of 3,4-diacetoxy-1-butene, and 12.1 g of acetaldehyde. Azobisisobutyronitrile was added thereinto in an amount of 0.1 mol% (based on the vinyl acetate added), and the temperature was elevated in a nitrogen stream with stirring to initiate polymerization. At the time when the rate of polymerization reached 96.2%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 50% (permittivity of the saponification solvent, 24.0). This solution was added into a kneader. While the temperature of the solution was kept at 40°C, a 2% methanol solution of sodium hydroxide was added to the copolymer solution in an amount of 5 mmol per mol of the sum of the vinyl acetate structural units and 3,4-diacetoxy-1-butene structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 1. The resin was evaluated in the same manners as in Example 1, and the results obtained are shown in Table 2.

### EXAMPLE 6

A PVA-based resin was obtained in the same manner as in Example 1, except that for the saponification of the copolymer, a 2% methanol solution of sodium hydroxide was added in an amount of 7 mmol per mol of the sum of the vinyl acetate structural units and 3,4-diacetoxy-1-butene structural units in the copolymer.
Property values of the PVA-based resin obtained are shown in Table 1. The resin was evaluated in the same manners as in Example 1, and the results obtained are shown in Table 2.

### EXAMPLE 7

A PVA-based resin was obtained in the same manner as in Example 1, except that for the saponification of the copolymer, a 2% methanol solution of sodium hydroxide was added in an amount of 4 mmol per mol of the sum of the vinyl acetate structural units and 3,4-diacetoxy-1-butene structural units in the copolymer.
Property values of the PVA-based resin obtained are shown in Table 1. The resin was evaluated in the same manners as in Example 1, and the results obtained are shown in Table 2.

### EXAMPLE 8

Into a reaction vessel equipped with a reflux condenser, dropping funnel, and stirrer were added 1,200 g of vinyl acetate, 60 g of methanol, and 117 g (6.5 mol%) of glycerin monoallyl ether. Azobisisobutyronitrile was added thereinto in an amount of 0.1 mol% (based on the vinyl acetate added), and the temperature was elevated in a nitrogen stream with stirring to initiate polymerization. At the time when the rate of polymerization reached 74.2%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) to regulate the concentration thereof to 50% (permittivity of the saponification solvent, 31.2). This solution was added into a kneader. While the temperature of the solution was kept at 40°C, a 2% methanol solution of sodium hydroxide was added in an amount of 5 mmol per mol of the sum of the vinyl acetate structural units and 3,4-diacetoxy-1-butene structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 1. The resin was evaluated in the same manners as in Example 1, and the results obtained are shown in Table 2.

### EXAMPLE 9

Into a reaction vessel equipped with a reflux condenser, dropping funnel, and stirrer were added 1,000 g of vinyl acetate, 450 g of methanol, 20 g (1.5 mol%) of vinylethylene carbonate, and 3.3 g of acetaldehyde. Azobisisobutyronitrile was added thereinto in an amount of 0.05 mol% (based on the vinyl acetate added), and the temperature was elevated in a nitrogen stream with stirring to initiate polymerization. At the time when the rate of polymerization reached 94.8%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 45% (permittivity of the saponification solvent, 24.0). This solution was added into a kneader. While the temperature of the solution was kept at 40°C, a 2% methanol solution of sodium hydroxide was added in an amount of 7 mmol per mol of the sum of the vinyl acetate structural units and 3,4-diacetoxy-1-butene structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 1. The resin was evaluated in the same manners as in Example 1, and the results obtained are shown in Table 2.

### EXAMPLE 10

Into a reaction vessel equipped with a reflux condenser, dropping funnel, and stirrer were added 1,200 g of vinyl acetate, 60 g of methanol, and 98 g (5.5 mol%) of 2,2-dimethyl-4-vinyl-1,3-dioxolane. Azobisisobutyronitrile was added thereinto in an amount of 0.1 mol% (based on the vinyl acetate added), and the temperature was elevated in a nitrogen stream with stirring to initiate polymerization. At the time when the rate of polymerization reached 70%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) to regulate the concentration thereof to 50% (permittivity of the saponification solvent, 31.2). This solution was added into a kneader. While the temperature of the solution was kept at 40°C, a 2% methanol solution of sodium hydroxide was added in an amount of 4 mmol per mol of the vinyl acetate structural units in the copolymer to conduct saponification. As the saponification proceeded, a saponification product began to precipitate and finally became a particle form. This saponification product was dispersed in 3-N hydrochloric acid (mixed solvent of water/methanol = 1/1) to conduct solvolysis of ketal structure at 60°C. The particles were taken out by filtration, sufficiently washed with methanol, and dried in a hot-air drying oven. Thus, a PVA-based resin was obtained.
Property values of the PVA-based resin obtained are shown in Table 1. The resin was evaluated in the same manners as in Example 1, and the results obtained are shown in Table 2.

### COMPARATIVE EXAMPLE 1

A PVA-based resin was obtained in the same manner as in Example 1, except that for the saponification of the copolymer, a 2% methanol solution of sodium hydroxide was added in an amount of 8 mmol per mol of the sum of the vinyl acetate structural units and 3,4-diacetoxy-1-butene structural units in the copolymer.
Property values of the PVA-based resin obtained are shown in Table 1. The resin was evaluated in the same manners as in Example 1, and the results obtained are shown in Table 2.

### COMPARATIVE EXAMPLE 2

A PVA-based resin was obtained in the same manner as in Example 1, except that for the saponification of the copolymer, a 2% methanol solution of sodium hydroxide was added in an amount of 3.5 mmol per mol of the sum of the vinyl acetate structural units and 3,4-diacetoxy-1-butene structural units in the copolymer.
Property values of the PVA-based resin obtained are shown in Table 1. The resin was evaluated in the same manners as in Example 1, and the results obtained are shown in Table 2.

### COMPARATIVE EXAMPLE 3

Into a reaction vessel equipped with a reflux condenser, dropping funnel, and stirrer were added 1,000 g of vinyl acetate, 160 g of methanol, and 5.8 g of acetaldehyde. Azobisisobutyronitrile was added thereinto in an amount of 0.04 mol% (based on the vinyl acetate added), and the temperature of the contents was elevated in a nitrogen stream with stirring to initiate polymerization. At the time when the rate of polymerization reached 96.3%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 45% (permittivity of the saponification solvent, 24.0). This solution was added into a kneader. While the temperature of the solution was kept at 40°C, a 2% methanol solution of sodium hydroxide was added in an amount of 5 mmol per mol of the vinyl acetate structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 1. The resin was evaluated in the same manners as in Example 1, and the results obtained are shown in Table 2.

**[Table 11**

| | Comonomer component | Degree of saponification (mol%) | Degree of polymerization | Content of 1,2-diol structural unit (mol%) | Content of Carbonyl group (mol%) | Absorbance | Foaming of aqueous solution |
|---|---|---|---|---|---|---|---|
| Example 1 | DAcB | 72.5 | 800 | 3.9 | 0.080 | 0.086 | A |
| Example 2 | DAcB | 74.6 | 800 | 8.2 | 0.015 | 0.022 | A |
| Example 3 | DAcB | 69.8 | 820 | 0.9 | 0.116 | 0.166 | B |
| Example 4 | DAcB | 72.8 | 880 | 4.4 | 0.009 | 0.008 | B |
| Example 5 | DAcB | 71.8 | 380 | 3.2 | 0.176 | 0.289 | B |
| Example 6 | DAcB | 86.2 | 800 | 3.9 | 0.080 | 0.098 | A |
| Example 7 | DAcB | 65.5 | 800 | 3.9 | 0.080 | 0.072 | B |
| Example 8 | GMAE | 72.2 | 510 | 6.4 | 0.008 | 0.007 | A |
| Example 9 | VEC | 81.5 | 820 | 1.5 | 0.054 | 0.062 | B |
| Example 10 | DMVD | 68.2 | 450 | 5.4 | 0.007 | 0.006 | B |
| Comparative Example 1 | DAcB | 88.2 | 800 | 3.9 | 0.080 | 0.115 | B |
| Comparative Example 2 | DAcB | 64.3 | 800 | 3.9 | 0.080 | 0.054 | C |
| Comparative Example 3 | - | 71.8 | 800 | - | 0.073 | 0.079 | D |

| | | | | | | | |
|---|---|---|---|---|---|---|---|
| Note) DAcB: 3,4-diacetoxy-1-butene GMAE: glycerin monoallyl ether VEC: vinylethylene carbonate DMVD: 2,2-dimethyl-4-vinyl-1,3-dioxolane | | | | | | | |

**[Table 2]**

| | Particle size distribution (%) | | Scale deposition state | Amount of foamed polymer (%) | Bulk density | Initial coloration | Heat resistance |
|---|---|---|---|---|---|---|---|
| | Particles above 42-mesh | 250-Mesh particles | | | | | |
| Example 1 | 0 | 0 | A | 0.004 | 0.55 | A | A |
| Example 2 | 0 | 0 | A | 0.005 | 0.53 | A | A |
| Example 3 | 0.004 | 0 | B | 0.010 | 0.53 | A | A |
| Example 4 | 0.002 | 0 | A | 0.007 | 0.54 | A | A |
| Example 5 | 0.240 | 0.03 | A | 0.250 | 0.50 | A | A |
| Example 6 | 0.190 | 0.04 | A | 0.009 | 0.55 | A | A |
| Example 7 | 0.009 | 0.02 | A | 0.010 | 0.51 | A | A |
| Example 8 | 0.002 | 0.01 | A | 0.008 | 0.51 | A | A |
| Example 9 | 0.007 | 0.01 | B | 0.010 | 0.53 | A | A |
| Example 10 | 0.008 | 0.02 | B | 0.010 | 0.50 | A | A |
| Comparative Example 1 | 0.400 | 0.30 | C | 0.550 | 0.53 | C | C |
| Comparative Example 2 | 0.300 | 0.40 | C | 0.470 | 0.46 | B | C |
| Comparative Example 3 | 1.900 | 0.80 | C | 2.440 | 0.48 | C | C |

### EXAMPLE 11

Into a reaction vessel equipped with a reflux condenser, dropping funnel, and stirrer were added 1,200 g of vinyl acetate, 60 g of methanol, 48 g (2 mol%) of 3,4-diacetoxy-1-butene, and 11.1 g of acetaldehyde. Azobisisobutyronitrile was added thereinto in an amount of 0.01 mol% (based on the vinyl acetate added), and the temperature was elevated in a nitrogen stream with stirring to initiate polymerization. At the time when the rate of polymerization reached 80.0%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 45% (permittivity of the saponification solvent, 22.2). This solution was added into a kneader. While the temperature of the solution was kept at 40°C, a 2% methanol solution of sodium hydroxide was added in an amount of 6 mmol per mol of the sum of the vinyl acetate structural units and 3,4-diacetoxy-1-butene structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 3.
The PVA-based resin obtained was used to conduct the microsuspension polymerization of vinyl acetate in the following manner, and was evaluated for foaming state in this polymerization.

Into a 500-mL separable flask made of glass were added 125.9 parts of ion-exchanged water in which 5.9 parts of the PVA-based resin obtained had been dissolved and 74.5 parts of vinyl acetate in which 0.4 parts of lauroyl peroxide had been dissolved. The solutions were homogeneously mixed together by means of a homogenizer to bring the mixture into a microsuspension state. Thereafter, a reflux condenser and a stirrer were attached to the separable flask. This reaction mixture was heated to 70°C with stirring to initiate polymerization. The reaction mixture which had been heated to that temperature was visually examined for foaming state. As a result, a foam was observed only at the gas/liquid interface.

### COMPARATIVE EXAMPLE 4

Into a reaction vessel equipped with a reflux condenser, dropping funnel, and stirrer were added 1,200 g of vinyl acetate, 60 g of methanol, and 18.3 g of acetaldehyde. Azobisisobutyronitrile was added thereinto in an amount of 0.005 mol% (based on the vinyl acetate added), and the temperature was elevated in a nitrogen stream with stirring to initiate polymerization. At the time when the rate of polymerization reached 79.5%, a given amount of m-dinitrobenzene was added to terminate the polymerization. Subsequently, the vinyl acetate monomer remaining unreacted was removed from the system by bubbling methanol vapor into the system. Thus, a methanol solution of a copolymer was obtained.
Subsequently, the solution was diluted with methanol (permittivity, 31.2) and methyl acetate (permittivity, 7.03) to regulate the concentration thereof to 45% (permittivity of the saponification solvent, 22.2). This solution was added into a kneader. While the temperature of the solution was kept at 40°C, a 2% methanol solution of sodium hydroxide was added in an amount of 6 mmol per mol of the vinyl acetate structural units in the copolymer to conduct saponification. As the saponification proceeded, a saponification product began to precipitate. At the time when the product became a particle form, it was taken out by filtration, sufficiently washed with methanol, and dried in a hot-air drying oven. Thus, a PVA-based resin was obtained.
Property values of the PVA-based resin obtained are shown in Table 3.
The PVA-based resin obtained was used to conduct the microsuspension polymerization of vinyl acetate in the same manner as in Example 11 and evaluated in the same manner. As a result, a foam had reached the highest part in the separable flask.

**[Table 3]**

| | Comonomer component | Degree of saponification (mol%) | Degree of polymerization | Content of 1,2-diol structural unit (mol%) | Content of Carbonyl group (mol%) | Absorbance |
|---|---|---|---|---|---|---|
| Example 11 | DAcB | 83.5 | 710 | 1.9 | 0.151 | 0.224 |
| Comparative Example 4 | - | 83.8 | 760 | - | 0.245 | 0.347 |

| | | | | | | |
|---|---|---|---|---|---|---|
| Note) DAcB: 3,4-diacetoxy-1-butene | | | | | | |

While the invention has been described in detail and with reference to specific embodiments thereof, it will be apparent to one skilled in the art that various changes and modifications can be made therein without departing from the spirit and scope thereof.
This application is based on a Japanese patent application filed on February 2, 2005 (Application No. 2005-026793) and a Japanese patent application filed on February 2, 2006 (Application No. 2006-025219), the contents thereof being herein incorporated by reference.

### INDUSTRIAL APPLICABILITY

The dispersion stabilizer for suspension polymerization of a vinyl-based compound of the invention attains excellent dispersion stabilization during the suspension polymerization of vinyl chloride and, hence, gives vinyl chloride-based polymer particles having a sharp particle size distribution and a high bulk density. An aqueous solution thereof is less apt to foam and, hence, the stabilizer is effective in diminishing the formation of a wet foam during polymerization and in diminishing dry-foam formation. The stabilizer hence inhibits formation of a polymer scale, which is causative of fish-eyes, and a foamy polymer. Furthermore, vinyl-based polymer particles with less coloring and excellent in heat resistance are obtained with the stabilizer. Consequently, the dispersion stabilizer of the invention is industrially extremely useful.

## Claims

1. A dispersion stabilizer for suspension polymerization of a vinyl-based compound, which comprises a polyvinyl alcohol-based resin comprising a 1,2-diol component at a side chain and having a degree of saponification of 65 to 87% by mol.

2. The dispersion stabilizer for suspension polymerization of a vinyl-based compound according to claim 1, wherein the polyvinyl alcohol-based resin has a 1,2-diol structural unit represented by the general formula (1): 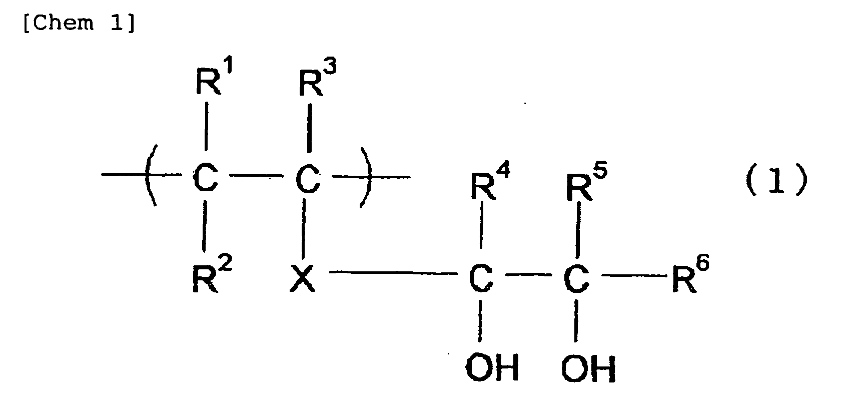 [wherein R¹, R², and R³ each independently represents a hydrogen atom or an organic group; X represents a single bond or a bonding chain; and R⁴, R⁵, and R⁶ each independently represents a hydrogen atom or an organic group].

3. The dispersion stabilizer for suspension polymerization of a vinyl-based compound according to claim 1 or 2, wherein the polyvinyl alcohol-based resin is obtained by saponifying a copolymer of a vinyl ester-based monomer and a compound represented by the general formula (2): 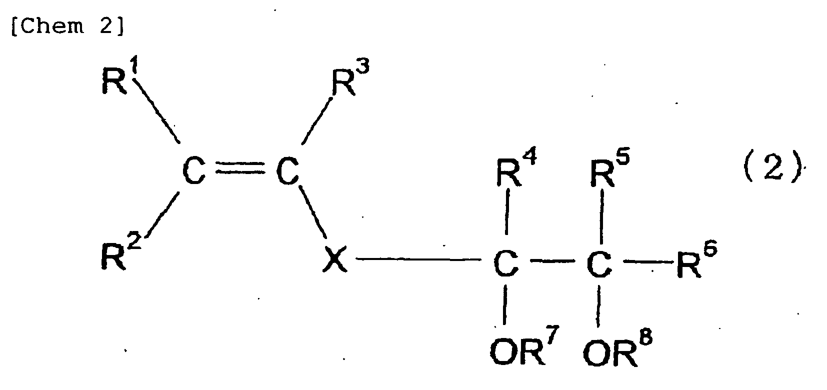 [wherein R¹, R², and R³ each independently represents a hydrogen atom or an organic group; X represents a single bond or a bonding chain; R⁴, R⁵, and R⁶ each independently represents a hydrogen atom or an organic group; and R⁷ and R⁸ each independently represents a hydrogen atom or R⁹-CO-(wherein R⁹ represents an alkyl group)].

4. The dispersion stabilizer for suspension polymerization of a vinyl-based compound according to claim 3, wherein the compound represented by the general formula (2) is 3,4-diacyloxy-1-butene.

5. The dispersion stabilizer for suspension polymerization of a vinyl-based compound according to claim 1 or 2, wherein the polyvinyl alcohol-based resin is obtained by saponifying a copolymer of a vinyl ester-based monomer and glycerin monoallyl ether.

6. The dispersion stabilizer for suspension polymerization of a vinyl-based compound according to claim 1 or 2, wherein the polyvinyl alcohol-based resin is obtained by saponifying and decarboxylating a copolymer of a vinyl ester-based monomer and a compound represented by the general formula (3): 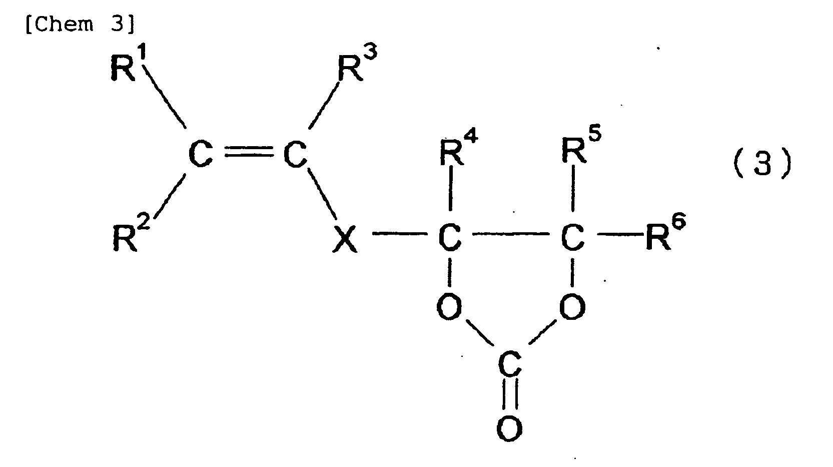 [wherein R¹, R², and R³ each independently represents a hydrogen atom or an organic group; X represents a single bond or a bonding chain; and R⁴, R⁵, and R⁶ each independently represents a hydrogen atom or an organic group].

7. The dispersion stabilizer for suspension polymerization of a vinyl-based compound according to claim 6, wherein the compound represented by the general formula (3) is vinylethylene carbonate.

8. The dispersion stabilizer for suspension polymerization of a vinyl-based compound according to claim 1 or 2, wherein the polyvinyl alcohol-based resin is obtained by saponifying and performing solvolysis of ketal structure of a copolymer of a vinyl ester-based monomer and a compound represented by the general formula (4): 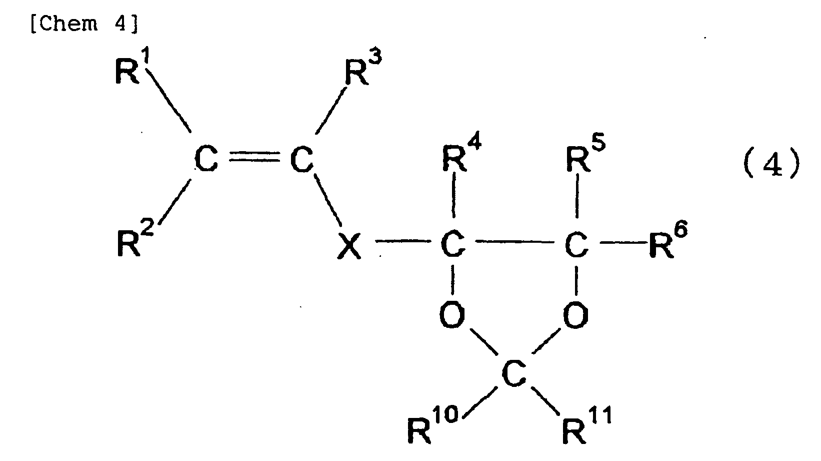 [wherein R¹, R², and R³ each independently represents a hydrogen atom or an organic group; X represents a single bond or a bonding chain; R⁴, R⁵, and R⁶ each independently represents a hydrogen atom or an organic group; and R¹⁰ and R¹¹ each independently represents a hydrogen atom or an organic group].

9. The dispersion stabilizer for suspension polymerization of a vinyl-based compound according to claim 8, wherein the compound represented by the general formula (4) is 2,2-dialkyl-4-vinyl-1,3-dioxolane.

10. The dispersion stabilizer for suspension polymerization of a vinyl-based compound according to any one of claims 1 to 9, wherein the polyvinyl alcohol-based resin is obtained through saponification in the presence of a solvent having a permittivity of 32 or lower.

11. The dispersion stabilizer for suspension polymerization of a vinyl-based compound according to any one of claims 1 to 10, wherein the polyvinyl alcohol-based resin contains a carbonyl group in a molecule.

12. The dispersion stabilizer for suspension polymerization of a vinyl-based compound according to any one of claims 1 to 11, wherein the polyvinyl alcohol-based resin has a degree of saponification of 68 to 83% by mol.

13. The dispersion stabilizer for suspension polymerization of a vinyl-based compound according to any one of claims 1 to 12, wherein the polyvinyl alcohol-based resin has an average degree of polymerization of 400 to 850.

14. The dispersion stabilizer for suspension polymerization of a vinyl-based compound according to any one of claims 1 to 13, wherein a content of the 1,2-diol component in the polyvinyl alcohol-based resin is 1 to 8% by mol.

## Patentansprüche

1. Dispersionsstabilisator für eine Suspensionspolymerisation einer Verbindung auf Vinylbasis, die ein Harz auf Polyvinyl-Alkohol-Basis aufweist, das einen 1,2-Diol-Anteil in einer Seitenkette aufweist und einen Verseifungsgrad von 65 bis 87 Mol-% aufweist.

2. Dispersionsstabilisator für eine Suspensionspolymerisation einer Verbindung auf Vinylbasis nach Anspruch 1, wobei das Harz auf Polyvinyl-Alkohol-Basis eine 1,2-Diol-Struktureinheit aufweist, die dargestellt wird durch die allgemeine Formel (1): 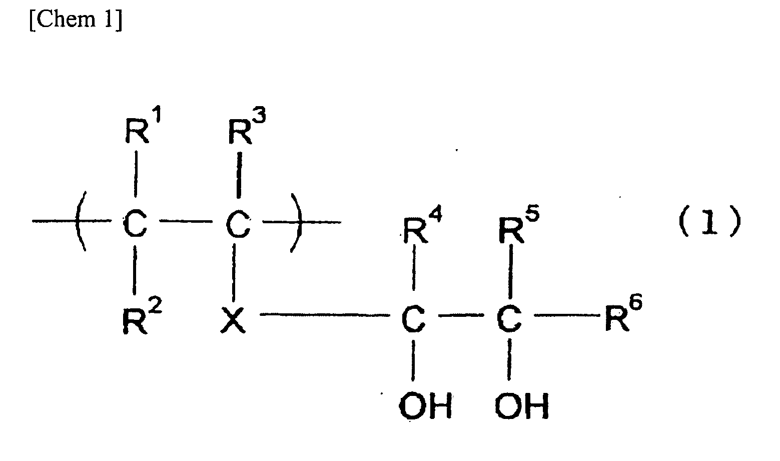 [wobei R¹, R² und R³ jeweils unabhängig voneinander ein Wasserstoffatom oder eine organische Gruppe darstellen; X eine einzelne Bindung oder eine Bindungskette darstellt; und R⁴, R⁵ und R⁶ jeweils unabhängig voneinander ein Wasserstoffatom oder eine organische Gruppe darstellen].

3. Dispersionsstabilisator für eine Suspensionspolymerisation einer Verbindung auf Vinylbasis nach Anspruch 1 oder 2, wobei das Harz auf Polyvinyl-Alkohol-Basis durch Verseifung eines Copolymers aus einem Monomer auf Vinyl-Ester-Basis und einer Verbindung erhalten wird, die dargestellt wird durch die allgemeine Formel (2): 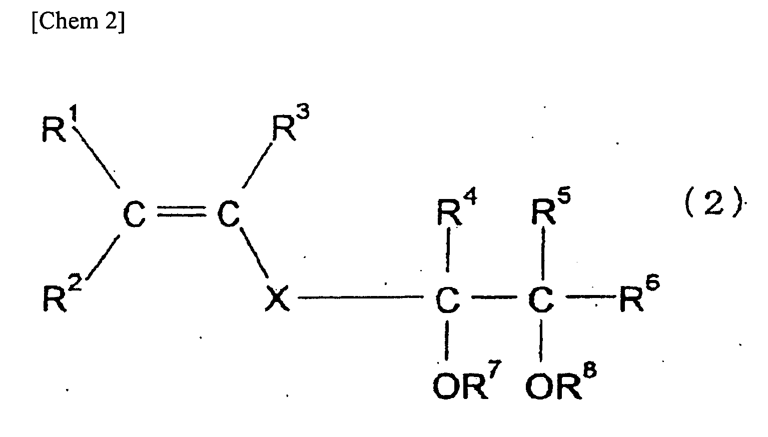 [wobei R¹, R² und R³ jeweils unabhängig voneinander ein Wasserstoffatom oder eine organische Gruppe darstellen; X eine einzelne Bindung oder eine Bindungskette darstellt; und R⁴, R⁵ und R⁶ jeweils unabhängig voneinander ein Wasserstoffatom oder eine organische Gruppe darstellen; und R⁷ und R⁸ jeweils unabhängig voneinander ein Wasserstoffatom oder R⁹-CO- darstellen (wobei R⁹ einen Alkylgruppe darstellt)].

4. Dispersionsstabilisator für eine Suspensionspolymerisation einer Verbindung auf Vinylbasis nach Anspruch 3, wobei die durch die allgemeine Formel (2) dargestellte Verbindung 3,4-Diacyloxy-1-buten ist.

5. Dispersionsstabilisator für eine Suspensionspolymerisation einer Verbindung auf Vinylbasis nach Anspruch 1 oder 2, wobei das Harz auf Polyvinyl-Alkohol-Basis durch Verseifung eines Copolymers aus einem Monomer auf Vinyl-Ester-Basis und einem Glycerinmonoallylether erhalten wird.

6. Dispersionsstabilisator für eine Suspensionspolymerisation einer Verbindung auf Vinylbasis nach Anspruch 1 oder 2, wobei das Harz auf Polyvinyl-Alkohol-Basis durch Verseifung und Decarboxylierung eines Copolymers aus einem Monomer auf Vinyl-Ester-Basis und einer Verbindung erhalten wird, die dargestellt wird durch die allgemeine Formel (3): 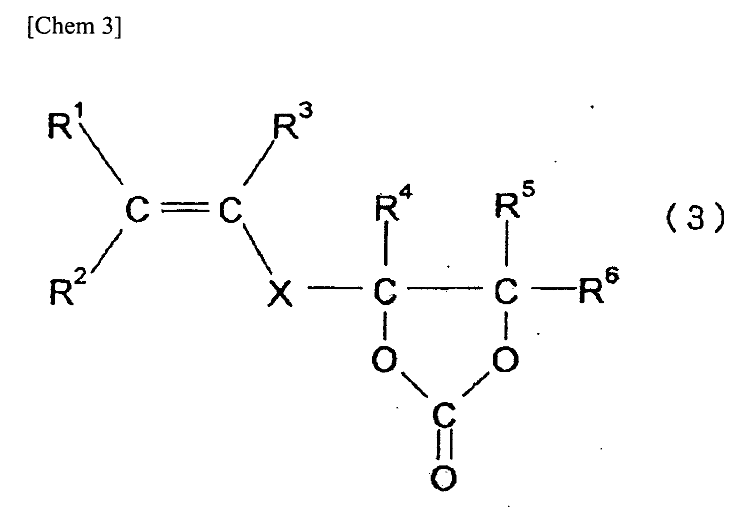 [wobei R¹, R² und R³ jeweils unabhängig voneinander ein Wasserstoffatom oder eine organische Gruppe darstellen; X eine einzelne Bindung oder eine Bindungskette darstellt; und R⁴, R⁵ und R⁶ jeweils unabhängig voneinander ein Wasserstoffatom oder eine organische Gruppe darstellen].

7. Dispersionsstabilisator für eine Suspensionspolymerisation einer Verbindung auf Vinylbasis nach Anspruch 6, wobei die durch die allgemeine Formel (3) dargestellte Verbindung ein Vinylethylencarbonat ist.

8. Dispersionsstabilisator für eine Suspensionspolymerisation einer Verbindung auf Vinylbasis nach Anspruch 1 oder 2, wobei das Harz auf Polyvinyl-Alkohol-Basis durch Verseifung und Ausführung einer Solvolyse einer Ketalstruktur eines Copolymers aus einem Monomer auf Vinyl-Ester-Basis und einer Verbindung erhalten wird, die dargestellt wird durch die allgemeine Formel (3): 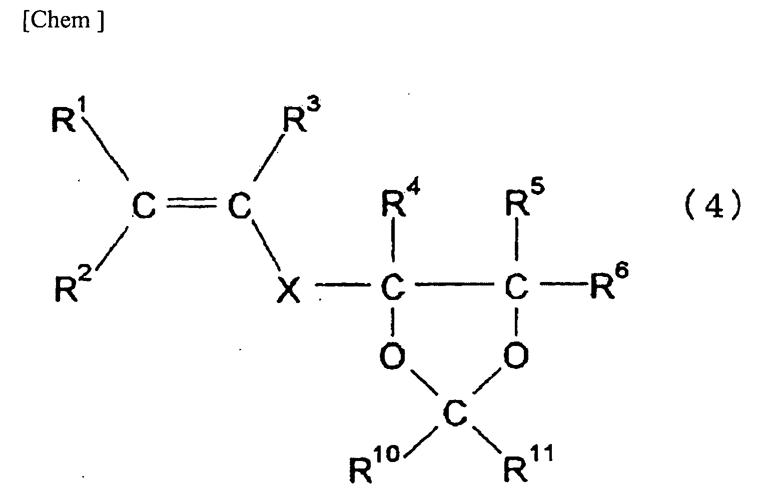 [wobei R¹, R² und R³ jeweils unabhängig voneinander ein Wasserstoffatom oder eine organische Gruppe darstellen; X eine einzelne Bindung oder eine Bindungskette darstellt; und R⁴, R⁵ und R⁶ jeweils unabhängig voneinander ein Wasserstoffatom oder eine organische Gruppe darstellen; und R¹⁰ und R¹¹ jeweils unabhängig voneinander ein Wasserstoffatom oder eine organische Gruppe darstellen].

9. Dispersionsstabilisator für eine Suspensionspolymerisation einer Verbindung auf Vinylbasis nach Anspruch 8, wobei die Verbindung, die durch die allgemeine Formel (4) dargestellt wird, 2,2-Dialkyl-4-vinyl-1,3-dioxolan ist.

10. Dispersionsstabilisator für eine Suspensionspolymerisation einer Verbindung auf Vinylbasis nach einem der Ansprüche 1 bis 9, wobei das Harz auf Polyvinyl-Alkohol-Basis durch Verseifung in Gegenwart eines Lösungsmittels mit einer Permittivität von 32 oder weniger erhalten wird.

11. Dispersionsstabilisator für eine Suspensionspolymerisation einer Verbindung auf Vinylbasis nach einem der Ansprüche 1 bis 10, wobei das Harz auf Polyvinyl-Alkohol-Basis eine Carbonylgruppe in einem Molekül enthält.

12. Dispersionsstabilisator für eine Suspensionspolymerisation einer Verbindung auf Vinylbasis nach einem der Ansprüche 1 bis 11, wobei das Harz auf Polyvinyl-Alkohol-Basis einen Verseifungsgrad von 68 bis 83 Mol-% aufweist.

13. Dispersionsstabilisator für eine Suspensionspolymerisation einer Verbindung auf Vinylbasis nach einem der Ansprüche 1 bis 12, wobei das Harz auf Polyvinyl-Alkohol-Basis einen durchschnittlichen Polymerisierungsgrad von 400 bis 850 aufweist.

14. Dispersionsstabilisator für eine Suspensionspolymerisation einer Verbindung auf Vinylbasis nach einem der Ansprüche 1 bis 13, wobei ein Gehalt des 1,2-Diol-Anteils in dem Harz auf Polyvinyl-Alkohol-Basis 1 bis 8 Mol-% beträgt.

## Revendications

1. Stabilisant de dispersion pour la polymérisation en suspension d'un composé à base de vinyle, qui comprend une résine à base de poly(alcool vinylique) comprenant un composant 1,2-diol au niveau d'une chaîne latérale et ayant un degré de saponification de 65 à 87 % en mol.

2. Stabilisant de dispersion pour la polymérisation en suspension d'un composé à base de vinyle selon la revendication 1 où la résine à base de poly(alcool vinylique) a une unité structurale 1,2-diol représentée par la formule générale (1) : 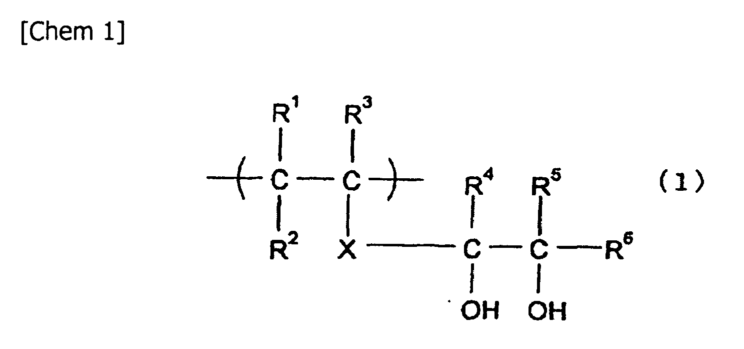 [où R¹, R² et R³ représentent chacun indépendamment un atome d'hydrogène ou un groupe organique ; X représente une simple liaison ou une chaîne de liaison ; et R⁴, R⁵ et R⁶ représentent chacun indépendamment un atome d'hydrogène ou un groupe organique].

3. Stabilisant de dispersion pour la polymérisation en suspension d'un composé à base de vinyle selon la revendication 1 ou 2 où la résine à base de poly(alcool vinylique) est obtenue par saponification d'un copolymère d'un monomère à base de vinylester et d'un composé représenté par la formule générale (2) : 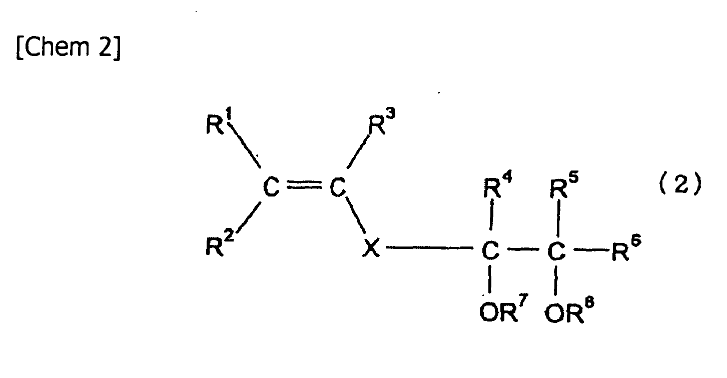 [où R¹, R² et R³ représentent chacun indépendamment un atome d'hydrogène ou un groupe organique ; X représente une simple liaison ou une chaîne de liaison ; R⁴, R⁵ et R⁶ représentent chacun indépendamment un atome d'hydrogène ou un groupe organique ; et R⁷ et R⁸ représentent chacun indépendamment un atome d'hydrogène ou R⁹-CO- (où R⁹ représente un groupe alkyle)].

4. Stabilisant de dispersion pour la polymérisation en suspension d'un composé à base de vinyle selon la revendication 3 où le composé représenté par la formule générale (2) est un 3,4-diacyloxy-1-butène.

5. Stabilisant de dispersion pour la polymérisation en suspension d'un composé à base de vinyle selon la revendication 1 ou 2 où la résine à base de poly(alcool vinylique) est obtenue par saponification d'un copolymère d'un monomère à base de vinylester et d'un monoallyléther de glycérine.

6. Stabilisant de dispersion pour la polymérisation en suspension d'un composé à base de vinyle selon la revendication 1 ou 2 où la résine à base de poly(alcool vinylique) est obtenue par saponification et décarboxylation d'un copolymère d'un monomère à base de vinylester et d'un composé représenté par la formule générale (3) : 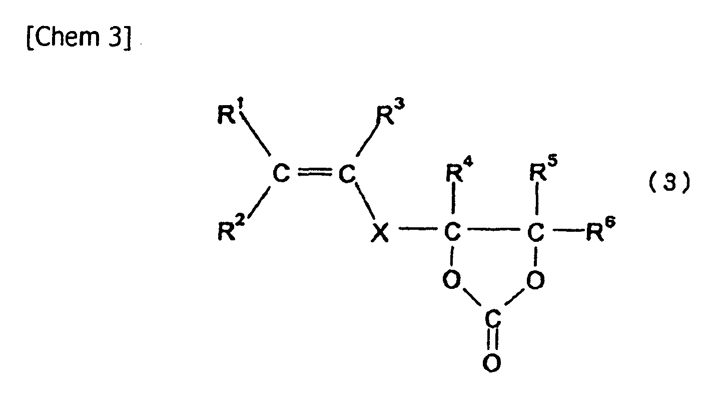 [où R¹, R² et R³ représentent chacun indépendamment un atome d'hydrogène ou un groupe organique ; X représente une simple liaison ou une chaîne de liaison ; et R⁴, R⁵ et R⁶ représentent chacun indépendamment un atome d'hydrogène ou un groupe organique].

7. Stabilisant de dispersion pour la polymérisation en suspension d'un composé à base de vinyle selon la revendication 6 où le composé représenté par la formule générale (3) est le carbonate de vinyléthylène.

8. Stabilisant de dispersion pour la polymérisation en suspension d'un composé à base de vinyle selon la revendication 1 ou 2 où la résine à base de poly(alcool vinylique) est obtenue par saponification et mise en oeuvre d'une solvolyse d'une structure cétal d'un copolymère d'un monomère à base de vinylester et d'un composé représenté par la formule générale (4) : 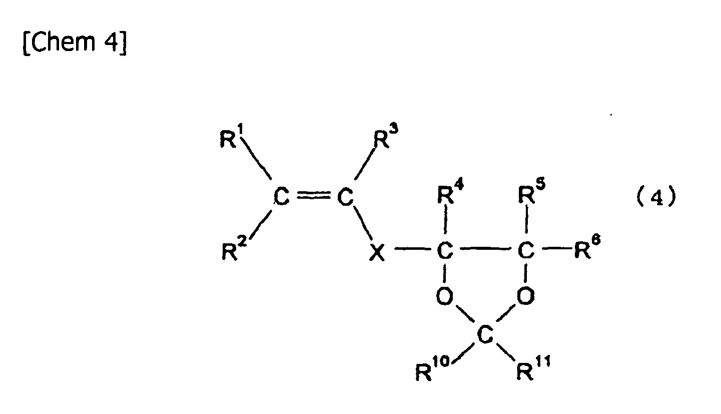 [où R¹, R² et R³ représentent chacun indépendamment un atome d'hydrogène ou un groupe organique ; X représente une simple liaison ou une chaîne de liaison ; R⁴, R⁵ et R⁶ représentent chacun indépendamment un atome d'hydrogène ou un groupe organique ; et R¹⁰ et R¹¹ représentent chacun indépendamment un atome d'hydrogène ou un groupe organique].

9. Stabilisant de dispersion pour la polymérisation en suspension d'un composé à base de vinyle selon la revendication 8 où le composé représenté par la formule générale (4) est un 2,2-dialkyl-4-vinyl-1,3-dioxolane.

10. Stabilisant de dispersion pour la polymérisation en suspension d'un composé à base de vinyle selon l'une quelconque des revendications 1 à 9 où la résine à base de poly(alcool vinylique) est obtenue par saponification en présence d'un solvant ayant une permittivité de 32 ou moins.

11. Stabilisant de dispersion pour la polymérisation en suspension d'un composé à base de vinyle selon l'une quelconque des revendications 1 à 10 où la résine à base de poly(alcool vinylique) contient un groupe carbonyle dans une molécule.

12. Stabilisant de dispersion pour la polymérisation en suspension d'un composé à base de vinyle selon l'une quelconque des revendications 1 à 11 où la résine à base de poly(alcool vinylique) a un degré de saponification de 68 à 83 % en mol.

13. Stabilisant de dispersion pour la polymérisation en suspension d'un composé à base de vinyle selon l'une quelconque des revendications 1 à 12 où la résine à base de poly(alcool vinylique) a un degré moyen de polymérisation de 400 à 850.

14. Stabilisant de dispersion pour la polymérisation en suspension d'un composé à base de vinyle selon l'une quelconque des revendications 1 à 13 où une teneur du composant 1,2-diol dans la résine à base de poly(alcool vinylique) est 1 à 8 % en mol.
